# FASCICULE DE BREVET EUROPEEN

(11) **EP 1 974 164 B1**
(45) Date de publication et mention de la délivrance du brevet: **01.06.2011**
(21) Numéro de dépôt: 06842148.6
(22) Date de dépôt: 13.12.2006
(51) Int. Cl.: F17C 5/06, F17C 5/00, F17C 7/00, F17C 13/02

(54) **PROCEDE ET DISPOSITIF DE REMPLISSAGE DE CONTENEURS DE GAZ SOUS PRESSION**
VERFAHREN UND VORRICHTUNG ZUM FÜLLEN VON DRUCKGASBEHÄLTERN
METHOD AND DEVICE FOR FILLING PRESSURE GAS CONTAINERS

(30) Priorité: 06.01.2006 FR 0650053
(43) Date de publication de la demande: 01.10.2008
(73) Titulaire: L'AIR LIQUIDE, Société Anonyme pour l'Etude et l'Exploitation des Procédés Georges Claude, 75007 Paris (FR)
(72) Inventeur: ALLIDIERES, Laurent, F-38410 Saint Martin d'Uriage (FR); COLOM, Jaya-Sitra, F-92150 Suresnes (FR); CHARBONNEAU, Thomas, F-38500 Coublevie (FR)
(74) Mandataire: De Cuenca, Emmanuel Jaime
(86) Numéro de dépôt international: PCT/FR2006/051338
(87) Numéro de publication internationale: WO 2007/077376

(56) Documents cités:
- EP-A1- 0 653 585
- FR-A- 2 879 719
- US-A- 5 479 966
- US-A- 5 868 176
- US-A- 5 881 779
- US-A1- 2003 070 724
- US-A1- 2005 178 463

## Description

La présente invention concerne un procédé et un dispositif de remplissage de conteneurs de gaz sous pression.

L'invention concerne notamment un procédé et un dispositif de remplissage de conteneurs tels que des bouteilles ou réservoirs de gaz sous pression.

Le remplissage de capacités haute pression, par exemple à bord de véhicules fonctionnant à l'hydrogène gazeux, doit être effectué de la manière la plus rapide possible pour diminuer la durée d'immobilisation des véhicules.

Les pressions finales d'utilisation de ces capacités ou réservoirs sont généralement comprises entre 350 et 700 bar environ.

Du fait de la nature quasi adiabatique de la compression du gaz dans les réservoirs et des pressions finales importantes, la température du gaz à l'intérieur des réservoirs s'élève rapidement et est susceptible d'endommager la structure composite des réservoirs.

Il est donc important de limiter cette température d'échauffement à la température de calcul du réservoir, c'est à dire une température maximale admissible (en général de l'ordre de 85°C).

Pour contrôler cette température de remplissage, une solution connue consiste à interrompre le remplissage en cas de surchauffe.

Une autre solution consiste à contrôler le débit de remplissage de façon que ce dernier reste inférieur à un débit qui pourrait engendrer une surchauffe trop importante.

Ces deux méthodes connues nécessitent un contrôle de débit de gaz alimentant le réservoir et donc l'utilisation d'une vanne de contrôle haute pression qui est très coûteuse.

Dans ces solutions connues, un premier mode de réalisation consiste à contrôler le débit de gaz directement en amont ou en aval de la vanne de contrôle.

Un second mode de réalisation n'utilisant pas de débitmètre consiste à contrôler le taux de montée en pression en aval de la vanne de contrôle (le taux de montée en pression étant la dérivée de la pression en aval de la vanne par rapport au temps).

Les procédés connus, notamment selon US 5,881,779 ou US 2005/0178462 ou US 5,868,176 ou US 2005/0178463, réalisent des remplissages de conteneur à partir d'une source de gaz à une pression haute via un passage fluidique réalisé entre la source et le conteneur et une pluralité de séquences d'ouverture et de fermeture du passage pendant des intervalles de temps.

Les séquences d'ouverture et de fermeture du passage sont contrôlées en fonction par exemple de signaux de pression et/ou de température et du volume du conteneur.

Selon d'autres techniques connues, le remplissage est paramétré en fonction de la masse instantanée du conteneur (US 2003/0070724).

Selon le document US 5,479,966, le remplissage est contrôlé via la température du gaz.

Selon le document EP 653 585 décrit un contrôle du remplissage via une mesure de pression et de débit.

Le remplissage est en général réalisé à partir d'une réserve de gaz sous pression. Ainsi, dans ces solutions de l'art antérieur, à mesure que la pression augmente dans le réservoir à remplir (en aval de la vanne), la pression dans la source diminue. La dynamique de contrôle de la vanne est donc très importante car elle doit contrôler un débit ou une montée en pression constante alors que ni la pression amont de la vanne ni la pression aval de la vanne ne sont constantes. Les boucles de contrôle de la vanne nécessitent donc un temps de réglage relativement important ainsi qu'une vanne de contrôle ayant une grande dynamique d'ouverture/fermeture. Un mauvais réglage de la boucle de contrôle de la vanne soit ne permet pas d'atteindre l'objectif de pression en fin de remplissage soit provoque une surchauffe du réservoir si l'objectif de pression est atteint avant la durée de remplissage prévue.

Un but de l'invention est de proposer un procédé de remplissage d'un conteneur de gaz sous pression, palliant tout ou partie des inconvénients de l'art antérieur.

Ce but est atteint par le fait que dans le procédé de remplissage d'un conteneur de gaz sous pression, notamment d'une bouteille ou d'un réservoir, à partir d'une source de gaz à une pression dite « haute », pendant une durée de remplissage prédéterminée choisie ou calculée avant remplissage et à une température déterminée, le conteneur ayant une pression interne initiale avant remplissage déterminée et une pression finale après remplissage prédéterminée, dans lequel une liaison formant un passage fluidique est réalisée entre la source et le conteneur, et dans lequel une pluralité de séquences d'ouverture et de fermeture du passage sont réalisées pendant des sous-intervalles de temps prédéterminés de la durée de remplissage prédéterminé, lesdits sous-intervalles de temps et les séquences d'ouverture et de fermeture correspondantes étant dimensionnés de façon que, pendant la durée de remplissage prédéterminée, la courbe de pression instantanée dans le conteneur en fonction du temps épouse la droite théorique reliant les pression avant et après remplissage durant la durée de remplissage, la durée de remplissage prédéterminée étant subdivisée en un nombre de sous-intervalles de temps compris entre deux et plusieurs centaines ayant des durées respectives déterminées, de préférence comprises entre 5 secondes et 20 secondes.

Par ailleurs, l'invention peut comporter l'une ou plusieurs des caractéristiques suivantes :
- les extrémités de la courbe de pression instantanée dans le conteneur en fonction du temps sont sensiblement confondues avec respectivement les extrémités de la droite théorique reliant les pressions avant et après remplissage,
- le procédé comporte, durant chaque sous-intervalles de temps, une première étape d'ouverture du passage à partir du début du sous-intervalles de temps, suivie d'une seconde étape de fermeture du passage à partir de l'instant où la pression dans instantanée dans le conteneur atteint une valeur déterminée au moins voisine et de préférence égale à la valeur de pression donnée par la droite théorique à cet instant de remplissage, et en ce que le passage est maintenu fermé jusqu'à la fin du sous-intervalles de temps,
- les sous-intervalles de temps et les séquences d'ouverture et de fermeture correspondantes sont dimensionnés de façon que, sensiblement à tout instant de remplissage donné au cours de la durée de remplissage, la courbe de pression instantanée dans le conteneur en fonction du temps s'écarte de la droite théorique d'une valeur de pression inférieure à 30 bar et de préférence inférieure à 10 bar ou inférieure à 20% et de préférence inférieure à 5% de la valeur de pression donnée par la droite à cet instant de remplissage,
- la durée de remplissage est subdivisée en un nombre de sous-intervalles de temps compris entre deux et plusieurs centaines ayant des durées respectives déterminées, de préférence comprises entre 5 secondes et 20 secondes,
- le remplissage est piloté uniquement à l'aide de la pression instantanée dans le conteneur,
- la température ambiante et la pression initiale dans le conteneur sont mesurées avant le remplissage,
- la pression finale de remplissage est calculée en fonction de d'une durée de remplissage souhaitée,
- le remplissage du conteneur est réalisé à une température calculée en fonction de la pression interne initiale, de la température ambiante et de la pression finale après remplissage, la température de remplissage calculée pouvant être inférieure à la température ambiante.

Selon une autre particularité, le procédé comporte :
- une étape de détermination de la température ambiante de remplissage,
- une étape de détermination de la pression interne initiale du conteneur avant remplissage,
- une étape de sélection d'une quantité de gaz à introduire dans le conteneur au cours du remplissage et/ou une étape de sélection d'une durée de remplissage maximale autorisée,
- une étape de calcul de la pression finale après remplissage dans le conteneur en fonction de la température ambiante de remplissage, de la pression interne initiale dans le conteneur et de la quantité de gaz à introduire et/ou de la durée maximale autorisée,
- une étape de détermination de la durée de remplissage avant remplissage, en fonction de la température ambiante de remplissage, de la pression interne initiale dans le conteneur et de la quantité de gaz à introduire et/ou de la durée de remplissage maximale autorisée,
- la pression finale après remplissage dans le conteneur est calculée pour correspondre à la plus sévère des deux conditions suivantes : capacité nominale de remplissage du conteneur ou la température de calcul du conteneur,
- les séquences d'ouverture et de fermeture sont réalisées par un organe du type vanne à fonctionnement « tout ou rien », sans contrôle de débit ou de température,
- les séquences d'ouverture et de fermeture sont commandées uniquement en fonction de la mesure de pression au sein d'une conduite de remplissage reliant la source au conteneur. Le procédé peut utiliser un dispositif de remplissage de conteneurs de gaz sous pression comprenant une source de gaz à une pression dite « haute », des moyens de mesure de la température ambiante de remplissage, des moyens aptes à être connectés à un conteneur pour former un passage fluidique entre la source et le conteneur, des moyens formant vanne sur le passage, des moyens de détermination de la pression instantanée dans le conteneur, des moyens de traitement de données et de commande reliés : aux moyens formant vanne, aux moyens de détermination de la pression instantanée et aux moyens de mesure de la température ambiante ; les moyens de traitement de données et de commande calculant ou recevant des consignes relatives à une durée de remplissage déterminée et une pression finale du conteneur après remplissage, de façon à piloter l'ouverture et la fermeture des moyens formant vanne, dans lequel, pour un conteneur à remplir, les moyens formant vanne étant pilotés de façon à réaliser une pluralité de séquences d'ouverture et de fermeture du passage pendant des sous-intervalles de temps déterminées de la durée de remplissage, lesdits sous-intervalles de temps et les séquences d'ouverture et de fermeture correspondantes étant dimensionnés de façon que, pendant la durée de remplissage, la courbe de pression instantanée dans le conteneur en fonction du temps épouse globalement la droite théorique reliant les pressions avant et après remplissage durant la durée de remplissage, les moyens formant vanne comportant une première vanne de type tout ou rien, par exemple à commande automatique.

Selon d'autres particularités possibles :
- les moyens de détermination de la pression instantanée dans le conteneur comportent un capteur de pression mesurant la pression en aval des moyens formant vanne,
- les moyens formant vanne comportent une seconde vanne située en aval de la première vanne telle qu'une vanne de type micrométrique de régulation de débit,
- le dispositif comporte sur le passage au moins l'un des moyens suivants : un système de soupape de protection, un système de décompression,
- le passage comporte un conduit destiné à être raccordée à un orifice d'un conteneur et pourvu de moyens anti-arrachemerit et de moyens de raccord apte à être connectés à des moyens de raccord conjugués d'un conteneur.

D'autres caractéristiques et avantages de l'invention apparaîtront mieux à la lecture de la description ci-après, faite en référence aux figures, dans lesquelles :
- la figure 1 représente une vue schématique illustrant la structure et le fonctionnement d'un système de remplissage selon un exemple de réalisation de l'invention,
- les figures 2 et 3 représentent de façon schématique plusieurs exemples de courbes de variation de la pression d'un conteneur en fonction du temps lors de divers remplissages.

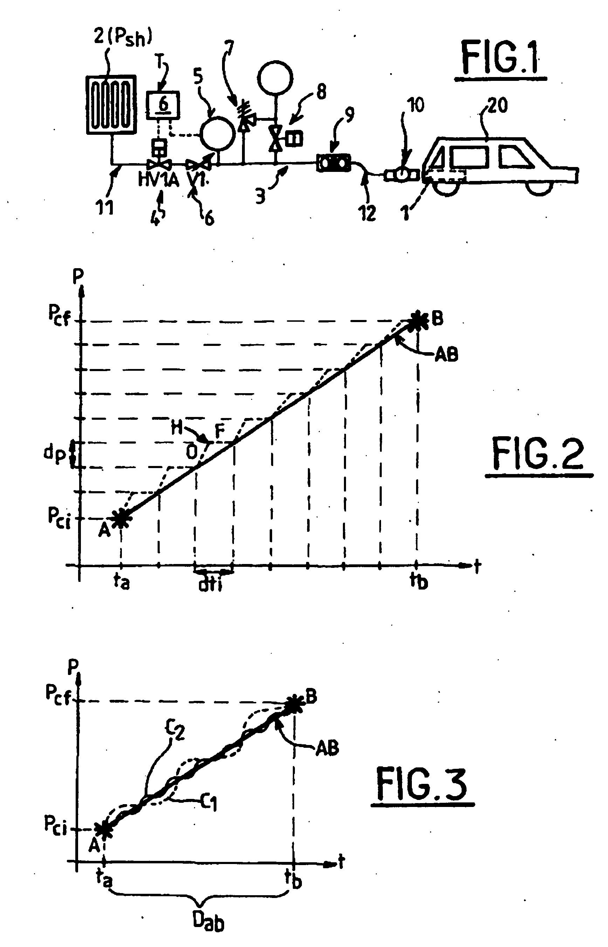

Le dispositif ou station de remplissage de conteneurs de gaz sous pression illustrée à la figure 1 comprend une source 2 de gaz sous pression comportant, par exemple, une ou plusieurs capacité ou bouteilles stockant le gaz à une pression de l'ordre par exemple de 700 bar. La source contient par exemple de l'hydrogène gazeux destiné à remplir des réservoirs 1 de véhicules 20. Une sortie de la source 2 de gaz est reliée à un conduit 11 de remplissage comprenant une première vanne 4 de contrôle de débit ayant une section d'ouverture relativement importante (ayant un diamètre de passage de l'ordre par exemple de 5 à 10mm). En aval de la première vanne 4, le conduit 11 de remplissage comporte en série une seconde vanne 6 de réglage de débit pour générer une perte de charge déterminée en aval de la première vanne 4. Bien entendu, les deux vannes 4 et 6 en série pourraient être remplacée par une unique vanne, par exemple pneumatique ayant une ouverture (débit) et un système d'ouverture/fermeture appropriés.

En aval de la seconde vanne 6, la station de remplissage comprend un capteur 5 ou transmetteur de pression relié à des moyens 6 de commande de la première vanne 4. Les moyens de commande 6 de la vanne 4 peuvent recevoir également d'autres informations, telles que la température ambiante T à laquelle s'effectue le remplissage. La conduite 11 de remplissage comporte ensuite une soupape 7 de protection en cas de surpression dans la conduite et une vanne 8 permettant la décompression de la conduite 11. En aval, la conduite 11 comprend de préférence un système 9 anti-arrachement relié à un flexible 12 dont l'extrémité comporte un connecteur 1 destiné à coopérer directement avec un réservoir 1 à remplir ou avec un circuit d'un réservoir 1 à remplir tel que celui d'un véhicule 20.

Un exemple de remplissage peut se dérouler comme suit. Avant d'effectuer le remplissage, la station de remplissage peut déterminer automatiquement la pression initiale Pci dans le réservoir 1 du véhicule 20 au moyen de la mesure de pression réalisée par le capteur 5 de pression et de la mesure de température T ambiante de remplissage. En fonction de ces paramètres et éventuellement d'autres paramètres de remplissage tels qu'une durée de remplissage souhaitée et/ou d'une quantité de gaz souhaitée, la station peut calculer automatiquement (moyens de traitement de données 6 par exemple) une pression finale Pcf à atteindre au sein du réservoir 1 ainsi que la durée Dab correspondante du remplissage.

Ainsi, et comme représenté aux figures 2 et 3, le système peut définir pour le réservoir 1 un point de départ A avec une pression initiale Pci à un instant de départ ta et un point d'arrivé B avec une pression finale Pcf à un instant ultérieur tb (durée de remplissage Dab= tb-ta). Idéalement, la courbe de remplissage peut suivre la droite théorique AB reliant les deux points de départ A et d'arrivée B.

Selon une caractéristique particulièrement avantageuse, le contrôle de la première vanne 4 est réalisé en réalisant une succession d'ouvertures O et de fermetures F successives, la seconde vanne 6 restant ouverte.

Le contrôle de la première vanne 4 est réalisé de préférence en discrétisant la durée Dab de remplissage prévue en plusieurs sous-intervalles ayant chacun une durée plus réduite, de l'ordre par exemple de 5 à 20 secondes (cf. figure 2). Les sous-intervalles de temps dti peuvent avoir des durées égales ou distinctes.

Pour chaque sous-intervalle de temps dti, les moyens de commande 6 calculent une différence de pression dp (cf. figure 2) correspondant à l'augmentation de pression qui serait réalisée par la droite AB théorique. La première vanne 4 de contrôle est ouverte O en début de chaque sous-intervalle de temps dti et reste ouverte jusqu'à ce que ce différentiel de pression (augmentation dp) soit atteint (cf. figure 2). La première vanne 4 est refermée F lorsque ce différentiel de pression dp est atteint (point H, cf. figure 2), ou au moins lorsqu'une valeur proche de celui-ci est atteinte (supérieure ou inférieure).

La seconde vanne 6 est de préférence à réglage micro-métrique et son débit est réglé pour permettre de s'assurer de la fermeture de la première vanne 4 à la fin de chaque sous-intervalle de temps dti. Ce réglage est effectué lors de la mise en oeuvre de la station en effectuant un remplissage complet d'un réservoir vide de manière à ce que la vanne se ferme lors de tous les intervalles dti, en particulier à la fin du remplissage. Dans l'exemple non limitatif de la figure 2, la différence de pression (Pcf-Pci) entre les points de départ A (ta) et d'arrivée B (tb) est discrétisée en huit sous-intervalles de temps dti égaux ayant chacun une durée de Dab=(tb-ta)/8 et un différentiel de pression DP=(Pcf-Pci)/8.

Ainsi, au début de chaque sous-intervalle de temps dti, la première vanne 4 est ouverte (étape O) puis refermée dès que la « pression objectif » dpi est atteinte (point H). Ensuite, la vanne 4 reste fermée jusqu'à la fin du sous-intervalle de temps.

De cette façon, la vanne 4 qui permet de contrôler le remplissage du réservoir 1 peut être une vanne automatique de type tout ou rien, ce qui permet de s'affranchir d'une vanne de contrôle de débit haute pression coûteuse, fragile et peu fiable. La demanderesse a constaté que le résultat d'un tel remplissage est identique à celui réalisé via un contrôle par une vanne de contrôle.

En effet, la demanderesse a constaté que, pour rejoindre le point de remplissage final B à partir du point de départ A, qu'elle que soit le « chemin » emprunté par la courbe de pression P en fonction du temps t, la température finale dans le réservoir sera sensiblement la même et donc la quantité de gaz-transférée sera sensiblement la même. Ainsi, comme représenté à la figure 3, pour un même temps de remplissage Dab, pour les deux courbes C1 et C2 sensiblement proches de la droite théorique AB, le résultat du remplissage sera sensiblement identique en terme de température finale dans le réservoir et de quantité de gaz transférée.

Selon l'invention il n'est donc pas nécessaire de prévoir un transfert ou une communication d'information (pression ou température) avec le véhicule. En effet, la mesure de pression sur la conduite 11 de remplissage de la station suffit.

Ce mode de remplissage par pulsations permet en outre d'homogénéiser la température à l'intérieur du réservoir rempli et évite les échauffements locaux et autres phénomènes de stratification de la température. Dans le cas où le gaz de remplissage est un mélange, l'invention permet une meilleure homogénéisation du mélange.

De préférence, les exigences de remplissage des réservoirs sont satisfaites en calculant une pression finale Pcf correspondant à la plus sévère des deux conditions suivantes : « capacité nominale de remplissage » ou « température de calcul du réservoir ». Si la pression finale de remplissage est inférieure ou égale à cette pression maximale de remplissage, on reste dans les limites de fonctionnement de la bouteille.

La « température de calcul du réservoir» est la température maximale pouvant être atteinte dans un réservoir en service, cette valeur est donnée par le fabricant.

La « capacité nominale de remplissage » est la masse de gaz qui peut être stockée dans un réservoir donné. Cette valeur est également spécifiée par le fabricant et est en général donnée sous la forme d'une pression nominale à une température nominale.

Le remplissage est interrompu lorsque la pression d'entrée atteint cette pression maximale de remplissage Pcf.

Ce procédé permet de respecter les deux valeurs limites de sécurité que sont la capacité nominale et la température maximale autorisée par le réservoir.

De façon pratique, la pression initiale du réservoir Pci peut être mesurée en équilibrant le connecteur et la ligne de remplissage avec le réservoir en injectant une petite quantité de gaz. La température ambiante T est également mesurée au niveau de la station de remplissage. La température ambiante T mesurée au niveau de la station doit être représentative de l'ambiance au niveau du réservoir. En général, la température mesurée au niveau de la borne de remplissage est assez représentative de la température au niveau du réservoir mais il peut être utile de s'en assurer et éventuellement d'opérer une correction.

Le dispositif calcule ensuite la pression maximale correspondant à la masse nominale ou à la température de calcul, à l'aide des paramètres mesurés que sont la température ambiante T et la pression initiale Pci dans le réservoir et à l'aide de la valeur de la durée de remplissage voulue Dab et/ou de la quantité de gaz souhaitée.

Au cours du remplissage, la pression P de gaz peut être mesurée au niveau du connecteur ou de la ligne de remplissage, en aval de la vanne 4. La pression P mesurée à ce niveau est égale à la pression dans le réservoir 1 au cours du remplissage.

Le remplissage peut donc être contrôlé uniquement à l'aide de la pression P d'entrée mesurée. Il n'est donc pas nécessaire de mesurer en temps réel la température du réservoir.

Selon une variante avantageuse, le remplissage peut être réalisé « à froid » c'est à dire que le remplissage est effectué avec du gaz refroidi à une température donnée. Selon ce mode de réalisation particulier, la température d'entrée du gaz dans le réservoir est calculée en fonction des paramètres suivants : la pression initiale Pci, la température ambiante T, la pression finale de remplissage Pcf et la durée de remplissage et/ou la quantité de gaz à transférer, tout en respectant les limites de fonctionnement de la bouteille.

La pression finale Pcf peut être fixée arbitrairement ou en fonction des conditions de procédé par exemple. Mais elle doit être de fait inférieure à la pression maximale autorisée par le réservoir. Par exemple, dans le cas où le remplissage du réservoir se fait par équilibrage de capacités de stockage sous pression, la pression finale sera limitée par la pression de stockage des capacités voire à une valeur inférieure du fait de l'équilibrage en pression.

Le procédé de l'invention est particulièrement utile pour les remplissages rapides, notamment les remplissages rapides de véhicules automobiles. Un remplissage rapide est un remplissage qui doit être réalisé par exemple en une durée allant de moins d'1 minute jusqu'à 10 minutes. Cette durée dépend des bouteilles à remplir et/ou du type de véhicule (scooter, voiture ou bus par exemple).

La présente invention est utilisable quelle que soit la nature du gaz. Il peut s'agir par exemple de méthane, hydrogène, oxygène, azote, hélium, etc. L'application véhicule vise en particulier le gaz naturel, l'hydrogène ou un mélange quelconque entre le gaz naturel et l'hydrogène.

## Revendications

1. Procédé de remplissage d'un conteneur (1) de gaz sous pression, notamment d'une bouteille ou d'un réservoir, à partir d'une source (2) de gaz à une pression (Psh) dite « haute », pendant une durée de remplissage prédéterminée (Dab) choisie ou calculée avant remplissage et à une température déterminée (T), le conteneur (1) ayant une pression interne (Pci) initiale avant remplissage déterminée et une pression finale (Pcf) après remplissage prédéterminée, dans lequel une liaison formant un passage (3) fluidique est réalisée entre la source (2) et le conteneur (1), et dans lequel une pluralité de séquences d'ouverture (O) et de fermeture (F) du passage sont réalisées pendant des sous-intervalles de temps (dti) prédéterminés de la durée de remplissage (Dab) prédéterminé, lesdits sous-intervalles de temps (dti) et les séquences d'ouverture (O) et de fermeture (F) correspondantes étant dimensionnés de façon que, pendant la durée de remplissage prédéterminée, la courbe (C1, C2) de pression instantanée (Pci) dans le conteneur (1) en fonction du temps (t) épouse la droite (AB) théorique reliant les pression avant (Pci) et après (Pcf) remplissage durant la durée (Dab) de remplissage et en ce que la durée de remplissage (Dab) prédéterminée est subdivisée en un nombre de sous-intervalles de temps (dti) compris entre deux et plusieurs centaines ayant des durées respectives déterminées, de préférence comprises entre 5 secondes et 20 secondes.

2. Procédé de remplissage selon la revendication 1, **caractérisé en ce que** les extrémités de la courbe (C1, C2) de pression instantanée (Pci) dans le conteneur (1) en fonction du temps (t) sont sensiblement confondues avec respectivement les extrémités de la droite (AB) théorique reliant les pressions avant (Pci) et après (Pcf) remplissage.

3. Procédé de remplissage selon la revendication 1 ou 2, **caractérisé en ce qu'**il comporte, durant chaque sous-intervalles de temps (dti), une première étape d'ouverture (O) du passage à partir du début du sous-intervalles de temps (dti), suivie d'une seconde étape de fermeture (F) du passage à partir de l'instant (t) où la pression dans instantanée (Pci) dans le conteneur (1) atteint une valeur déterminée au moins voisine et de préférence égale à la valeur de pression donnée par la droite (AB) théorique à cet instant (t) de remplissage, et **en ce que** le passage est maintenu fermé jusqu'à la fin du sous-intervalles de temps (dti).

4. Procédé de remplissage selon l'une quelconque des revendications 1 à 3, **caractérisé en ce que** les sous-intervalles de temps (dti) et les séquences d'ouverture (O) et de fermeture (F) correspondantes sont dimensionnés de façon que, sensiblement à tout instant (t) de remplissage donné au cours de la durée (Dab) de remplissage prédéterminée, la courbe (C1, C2) de pression instantanée (Pci) dans le conteneur (1) en fonction du temps (t) s'écarte de la droite (AB) théorique d'une valeur de pression inférieure à 30 bar et de préférence inférieure à 10 bar ou inférieure à 20% et de préférence inférieure à 5% de la valeur de pression donnée par la droite (AB) à cet instant (t) de remplissage.

5. Procédé de remplissage selon l'une quelconque des revendications 1 à 4, **caractérisé en ce que** le remplissage est piloté uniquement à l'aide de la pression instantanée (P) dans le conteneur (1).

6. Procédé de remplissage selon l'une quelconque des revendications 1 à 5, **caractérisé en ce qu'**il comporte :
- une étape de détermination de la température (T) ambiante de remplissage,
- une étape de détermination de la pression interne initiale (Pci) du conteneur (1) avant remplissage,
- une étape de sélection d'une quantité de gaz à introduire dans le conteneur au cours du remplissage et/ou une étape de sélection d'une durée de remplissage maximale autorisée,
- une étape de calcul de la pression finale (Pcf) après remplissage dans le conteneur (1) en fonction de la température (T) ambiante de remplissage, de la pression interne initiale (Pci) dans le conteneur (1) et de la quantité de gaz à introduire et/ou de la durée maximale autorisée,
- une étape de détermination de la durée de remplissage (Dab) avant remplissage, en fonction de la température (T) ambiante de remplissage, de la pression interne initiale (Pci) dans le conteneur (1) et de la quantité de gaz à introduire et/ou de la durée de remplissage maximale autorisée.

7. Procédé de remplissage selon la revendication 6, **caractérisé en ce que** la pression finale (Pcf) après remplissage dans le conteneur (1) est calculée pour correspondre à la plus sévère des deux conditions suivantes : capacité nominale de remplissage du conteneur (1) ou la température de calcul du conteneur (1).

8. Procédé selon l'une quelconque des revendications précédentes **caractérisé en ce que** les séquences d'ouverture (O) et de fermeture (F) sont réalisées par un organe du type vanne à fonctionnement « tout ou rien », sans contrôle de débit ou de température.

9. Procédé selon l'une quelconque des revendications précédentes, **caractérisé en ce que** les séquences d'ouverture (O) et de fermeture (F) sont commandées uniquement en fonction de la mesure de pression au sein d'une conduite de remplissage reliant la source (2) au conteneur (1).

10. Procédé de remplissage selon l'une quelconque des revendications 1 à 9, **caractérisé en ce qu'**il utilise un dispositif de remplissage de conteneurs de gaz sous pression comprenant une source (2) de gaz à une pression (Psh) dite « haute », des moyens de mesure de la température (T) ambiante de remplissages, des moyens aptes à être connectés à un conteneur (1) pour former un passage (3) fluidique entre la source et le conteneur (1), des moyens (4) formant vanne sur le passage (3), des moyens (5) de détermination de la pression instantanée (P) dans le conteneur (1), des moyens (6) de traitement de données et de commande reliés : aux moyens (4) formant vanne, aux moyens (5) de détermination de la pression instantanée (Pci) et aux moyens de mesure de la température (T) ambiante ; les moyens (6) de traitement de données et de commande calculant ou recevant des consignes relatives à une durée de remplissage déterminée (Dab) et une pression finale (Pcf) du conteneur (1) après remplissage, de façon à piloter l'ouverture et la fermeture des moyens (4) formant vanne, dans lequel, pour un conteneur (1) à remplir, les moyens (4) formant vanne étant pilotés de façon à réaliser une pluralité de séquences d'ouverture (O) et de fermeture (F) du passage pendant des sous-intervalles de temps (dti) déterminées de la durée de remplissage (Dab), lesdits sous-intervalles de temps (dti) et les séquences d'ouverture (O) et de fermeture (F) correspondantes étant dimensionnés de façon que, pendant la durée de remplissage, la courbe (C1, C2) de pression instantanée (Pci) dans le conteneur (1) en fonction du temps (t) épouse globalement la droite (AB) théorique reliant les pressions avant (Pci) et après (Pcf) remplissage durant la durée de remplissage, les moyens formant vanne comportent une première vanne (4) de type tout ou rien, par exemple à commande automatique.

11. Procédé selon la revendication 10, **caractérisé en ce que** les moyens (5) de détermination de la pression instantanée (P) dans le conteneur (1) comportent un capteur de pression mesurant la pression en aval des moyens (4) formant vanne.

12. Procédé selon la revendication 10 ou 11, **caractérisé en ce que** les moyens formant vanne comportent une seconde vanne (6) située en aval de la première vanne (4) telle qu'une vanne de type micrométrique de régulation de début.

13. Procédé selon l'une quelconque des revendications 10 à 12, **caractérisé en ce qu'**il comporte sur le passage (3) au moins l'un des moyens suivants : un système (7) de soupape de protection, un système (8) de décompression.

14. Procédé selon l'une quelconque des revendications 10 à 13, **caractérisé en ce que** le passage (3) comporte un conduit destiné à être raccordée à un orifice d'un conteneur (1) et pourvu de moyens anti-arrachement et de moyens (10) de raccord apte à être connectés à des moyens de raccord conjugués d'un conteneur (1).

## Claims

1. Method for filling a pressure gas container (1) from a gas source (2) at a pressure (Psh) known as a high pressure, for a predefined filling time (Dab) selected or calculated prior to filling and at a predefined temperature (T), the container (1) having a predefined initial internal pressure (Pci) before filling and a predefined final pressure (Pcf) after filling, in which a connection is produced in the form of a fluid passage (3) between the source (2) and the container (1), and in which a plurality of the passage opening (O) and closing (F) sequences are carried out during predefined time sub-intervals (dti) of the predefined filling time (Dab), said time sub-intervals (dti) and the corresponding opening (O) and closing (F) sequences being dimensioned so that, during the predefined filling time, the curve (C1, C2) of a current pressure (Pci) in the container (1) follows, as a function of time (t), a theoretical line (AB) linking the pressure measured before (Pci) and after (Pcf) the filling during the filling time (Dab), and in that the predefined filling time (Dab) is subdivided into a number of time sub-intervals (dti) ranging from two to several hundred seconds having predefined durations, preferably ranging from 5 to 20 seconds.

2. Filling method according to Claim 1, **characterized in that** the ends of the curve (C1, C2) of the current pressure (Pci) in the container (1) as a function of time (t) are substantially merged respectively with the ends of the theoretical line (AB) linking the pressures before (Pci) and after (Pcf) the filling.

3. Filling method according to either of Claims 1 and 2, **characterized in that** it comprises, during each time sub-interval (dti), a first step of opening (0) of the passage from the start of the time sub-intervals (dti), followed by a second step of closing (F) of the passage from the time (t) when the current pressure (Pci) in the container (1) reaches a predefined value at least close to and preferably equal to the pressure value given by the theoretical line (AB) at this time (t) of filling, and **in that** the passage is kept closed until the end of the time sub-interval (dti).

4. Filling method according to any one of Claims 1 to 3, **characterized in that** the time sub-intervals (dti) and the corresponding opening (0) and closing (F) sequences are dimensioned so that, substantially at any given time (t) of filling during the predefined filling time (Dab), the curve (C1, C2) of the current pressure (Pci) in the container (1) as a function of time (t) deviates from the theoretical line (AB) by a pressure value lower than 30 bar and preferably lower than 10 bar or lower than 20% and preferably lower than 5% of the pressure value given by the line (AB) at this time (t) of filling.

5. Filling method according to any one of Claims 1 to 4, **characterized in that** the filling is exclusively controlled using the current pressure (P) in the container (1).

6. Filling method according to any one of Claims 1 to 5, **characterized in that** it comprises:
- a step of determining the ambient filling temperature (T),
- a step of determining the initial internal pressure (Pci) of the container (1) before filling,
- a step of selecting a quantity of gas to be introduced into the container during the filling and/or a step of selecting a maximum allowable filling time,
- a step of calculating the final pressure (Pcf) after filling in the container (1) as a function of the ambient filling temperature (T), the initial internal pressure (Pci) in the container (1) and the quantity of gas to be introduced and/or the maximum allowable time,
- a step of determining the filling time (Dab) before filling, as a function of the ambient filling temperature (T), the initial internal pressure (Pci) in the container (1) and the quantity of gas to be introduced and/or the maximum allowable time.

7. Filling method according to Claim 6, **characterized in that** the final pressure (Pcf) after filling in the container (1) is calculated to correspond to the more severe of the following two conditions: nominal filling capacity of the container (1) or the design temperature of the container (1).

8. Method according to any one of the preceding claims, **characterized in that** the opening (0) and closing (F) sequences are carried out by a member of the "on-off" valve type, without flow rate or temperature control.

9. Method according to any one of the preceding claims, **characterized in that** the opening (0) and closing (F) sequences are triggered exclusively as a function of the pressure measurement in a filling line connecting the source (2) to the container (1).

10. Filling method according to any one of Claims 1 to 9, **characterized in that** it uses a device comprising a gas source (2) at a pressure (Psh) known as a high pressure, means for measuring the ambient filling temperature (T), means suitable for being connected to a container (1) to form a fluid passage (3) between the source and the container (1), valve forming means (4) on the passage (3), means (5) for determining the current pressure (P) in the container (1), data processing and control means (6) connected: to the valve forming means (4), to the means (5) for determining the current pressure (Pci), and to the means for measuring the ambient temperature (T); the data processing and control means (6) calculating or receiving setpoints relative to a predefined filling time (Dab) and a final pressure (Pcf) of the container (1) after filling, in order to control the opening and closing of the valve forming means (4), in which, for a container (1) to be filled, the valve forming means (4) being controlled in order to carry out a plurality of sequences of opening (O) and closing (F) the passage during predefined time sub-intervals (dti) of the filling time (Dab), said time sub-intervals (dti) and the corresponding opening (O) and closing (F) sequences being dimensioned so that, during the predefined filling time, the curve (C1, C2) of a current pressure (Pci) in the container (1) follows, as a function of time (t), roughly matches the theoretical line (AB) linking the pressure measured before (Pci) and after (Pcf) the filling during the filling time, the valve forming means comprise a first on-off type valve (4), for example by automatic control.

11. Method according to Claim 10, **characterized in that** the means (5) for determining the current pressure (P) in the container (1) comprise a pressure sensor measuring the pressure downstream of the valve forming means (4).

12. Method according to either of Claims 10 and 11, **characterized in that** the valve forming means comprise a second valve (6) positioned downstream of the first valve (4), such as a micrometric flow metering valve.

13. Method according to any one of Claims 10 to 12, **characterized in that** it comprises, on the passage (3), at least one of the following means: a safety valve system (7), a decompression system (8).

14. Method according to any one of Claims 10 to 13, **characterized in that** the passage (3) comprises a line for connection to an orifice of a container (1) and provided with pulloff prevention means and coupling means (10) suitable for being connected to conjugated coupling means of a container (1).

## Patentansprüche

1. Verfahren zum Befüllen eines Behälters (1) mit unter Druck stehendem Gas, insbesondere einer Flasche oder eines Vorratsbehälters, ausgehend von einer Quelle (2) unter so genanntem "hohen" Druck (Psh) während einer vorgegebenen Befüllungsdauer (Dab), die vor der Befüllung gewählt oder berechnet wird, und auf einer bestimmten Temperatur (T), wobei der Behälter (1) einen bestimmten anfänglichen Innendruck (Pci) vor dem Befüllen und einen vorgegebenen Enddruck (Pcf) nach dem Befüllen besitzt, wobei eine Verbindung, die einen Fluidkanal (3) bildet, zwischen der Quelle (2) und dem Behälter (1) verwirklicht wird und wobei mehrere Folgen des Öffnens (O) und des Schließens (F) des Kanals während vorgegebener Zeitunterintervalle (dti) der vorgegebenen Befüllungsdauer (Dab) verwirklicht werden, wobei die Zeitunterintervalle (dti) und die entsprechenden Folgen des Öffnens (0) des Schließens (F) so bemessen sind, dass während der vorgegebenen Befüllungsdauer die Kurve (C1, C2) des momentanen Drucks (Pci) im Behälter (1) als Funktion der Zeit (t) sich an die theoretische Gerade (AB) anschmiegt, die den Druck (Pci) vor dem Befüllen und den Druck (Pcf) nach dem Befüllen während der Befüllungsdauer (Dab) verbindet, und dass die vorgegebene Befüllungsdauer (Dab) in eine Anzahl von Zeitunterintervallen (dti) unterteilt wird, die zwischen zwei und mehreren hundert liegt, die bestimmte jeweilige Dauern haben, die vorzugsweise im Bereich von 5 Sekunden bis 20 Sekunden liegen.

2. Befüllungsverfahren nach Anspruch 1, **dadurch gekennzeichnet, dass** die Enden der Kurve (C1, C2) des momentanen Drucks (Pci) in dem Behälter (1) als Funktion der Zeit (t) mit den jeweiligen Enden der theoretischen Geraden (AB), die die Drücke (Pci, Pcf) vor bzw. nach dem Befüllen verbindet, im Wesentlichen zusammenfallen.

3. Befüllungsverfahren nach Anspruch 1 oder 2, **dadurch gekennzeichnet, dass** es während jedes Zeitunterintervalls (dti) einen ersten Schritt des Öffnens (O) des Durchlasses zu Beginn des Zeitunterintervalls (dti) enthält, gefolgt von einem zweiten Schritt des Schließens (F) des Durchlasses zu dem Zeitpunkt (t), zu dem der momentane Druck (Pci) im Behälter (1) einen bestimmten Wert annimmt, der wenigstens in der Umgebung des Druckwerts liegt und vorzugsweise gleich diesem Druckwert ist, der durch die theoretische Gerade (AB) zu diesem Befüllungszeitpunkt (t) gegeben ist, und dass der Durchlass bis zum Ende des Zeitunterintervalls (dti) geschlossen gehalten wird.

4. Befüllungsverfahren nach einem der Ansprüche 1 bis 3, **dadurch gekennzeichnet, dass** die Zeitunterintervalle (dti) und die entsprechenden Folgen des Öffnens (O) und des Schließens (F) so bemessen sind, dass im Wesentlichen zu jedem gegebenen Befüllungszeitpunkt (t) während der vorgegebenen Befüllungsdauer (Dab) die Kurve (C1, C2) des momentanen Drucks (Pci) im Behälter (1) als Funktion der Zeit (t) sich von der theoretischen Geraden (AB) um einen Druckwert entfernt, der kleiner als 30 bar ist und vorzugsweise kleiner als 10 bar ist oder weniger als 20 % und vorzugsweise weniger als 5 % des Druckwerts beträgt, der durch die Gerade (AB) zu diesem Befüllungszeitpunkt (t) gegeben ist.

5. Befüllungsverfahren nach einem der Ansprüche 1 bis 4, **dadurch gekennzeichnet, dass** die Befüllung nur mit Hilfe des momentanen Drucks (P) im Behälter (1) gesteuert wird.

6. Befüllungsverfahren nach einem der Ansprüche 1 bis 5, **dadurch gekennzeichnet, dass** es enthält:
- einen Schritt des Bestimmens der Umgebungstemperatur (T) bei der Befüllung,
- einen Schritt des Bestimmens des anfänglichen Innendrucks (Pci) des Behälters (1) vor dem Befüllen,
- einen Schritt des Auswählens einer in den Behälter während des Befüllens einzuleitenden Gasmenge und/oder einen Schritt des Auswählens einer maximal zulässigen Befüllungsdauer,
- einen Schritt des Berechnens des Enddrucks (Pcf) nach dem Befüllen in dem Behälter (1) als Funktion der Umgebungstemperatur (T) bei der Befüllung, des anfänglichen Innendrucks (Pci) im Behälter (1) und der einzuleitenden Gasmenge und/oder der maximal zulässigen Dauer,
- einen Schritt des Bestimmens der Befüllungsdauer (Dab) vor dem Befüllen als Funktion der Umgebungstemperatur (T) bei der Befüllung, des anfänglichen Innendrucks (Pci) im Behälter (1) und der einzuleitenden Gasmenge und/oder der maximal zulässigen Befüllungsdauer.

7. Befüllungsverfahren nach Anspruch 6, **dadurch gekennzeichnet, dass** der Enddruck (Pcf) nach dem Befüllen im Behälter (1) so berechnet wird, dass er der strengeren der zwei folgenden Bedingungen entspricht:
Nennbefüllungskapazität des Behälters (1) oder berechnete Temperatur des Behälters (1).

8. Verfahren nach einem der vorhergehenden Ansprüche, **dadurch gekennzeichnet, dass** die Folgen des Öffnens (O) und des Schließens (F) durch ein Organ des Schiebertyps mit "Alles oder Nichts"-Funktion ohne Steuerung des Durchflusses oder der Temperatur, verwirklicht werden.

9. Verfahren nach einem der vorhergehenden Ansprüche, **dadurch gekennzeichnet, dass** die Folgen des Öffnens (O) und des Schließens (F) nur als Funktion der Messung des Drucks im Inneren einer die Quelle (2) mit dem Behälter (1) verbindenden Befüllungsleitung gesteuert werden.

10. Befüllungsverfahren nach einem der Ansprüche 1 bis 9, **dadurch gekennzeichnet, dass** es eine Vorrichtung zum Befüllen von Behältern mit unter Druck stehendem Gas verwendet, mit einer Quelle (2) für Gas, das unter einem so genannten "hohen" Druck (Psh) steht, Mitteln zum Messen der Umgebungstemperatur (T) bei der Befüllung, Mitteln, die mit dem Behälter (1) verbunden werden können, um einen Fluiddurchlass (3) zwischen der Quelle und dem Behälter (1) zu bilden, Mitteln (4), die in dem Durchlass (3) einen Schieber bilden, Mitteln (5) zum Bestimmen des momentanen Drucks (P) im Behälter (1), und Mitteln (6) zur Datenverarbeitung und zur Steuerung, die verbunden sind mit: den einen Schieber bildenden Mitteln (4), den Mitteln (5) zum Bestimmen des momentanen Drucks (Pci) und den Mitteln zum Messen der Umgebungstemperatur (T); wobei die Mittel (6) zur Datenverarbeitung und für die Steuerung Sollwerte für eine bestimmte Befüllungsdauer (Dab) und einen Enddruck (Pcf) des Behälters (1) nach dem Befüllen berechnen oder empfangen, um das Öffnen und das Schließen der einen Schieber bildenden Mittel (4) zu steuern, wobei für einen zu befüllenden Behälter (1) die einen Schieber bildenden Mittel (4) in der Weise gesteuert werden, dass mehrere Folgen des Öffnens (O) und des Schließens (F) des Durchlasses während bestimmter Zeitunterintervalle (dti) der Befüllungsdauer (Dab) verwirklicht werden, wobei die Zeitunterintervalle (dti) und die entsprechenden Folgen des Öffnens (0) und des Schließens (F) in der Weise bemessen sind, dass sich während der Befüllungsdauer die Kurve (C1, C2) des momentanen Drucks (Pci) im Behälter (1) als Funktion der Zeit (t) global an die theoretische Gerade (AB) anschmiegt, die den Druck (Pci) vor dem Befüllen und den Druck (Pcf) nach dem Befüllen während der Befüllungsdauer verbindet, wobei die der einen Schieber bildenden Mittel einen ersten Schieber (4) des Typs "Alles oder Nichts", beispielsweise mit automatischer Steuerung, enthalten.

11. Verfahren nach Anspruch 10, **dadurch gekennzeichnet, dass** die Mittel (5) zum Bestimmen des momentanen Drucks (P) in dem Behälter (1) einen Drucksensor aufweisen, der den Druck stromabseitig der einen Schieber bildenden Mittel (4) misst.

12. Verfahren nach Anspruch 10 oder 11, **dadurch gekennzeichnet, dass** die einen Schieber bildenden Mittel einen zweiten Schieber (6) enthalten, der sich stromabseitig von dem ersten Schieber (4) befindet, etwa ein Schieber des Mikrometertyps mit Durchflussregulierung.

13. Verfahren nach einem der Ansprüche 10 bis 12, **dadurch gekennzeichnet, dass** es in dem Durchlass (3) wenigstens eines der folgenden Mittel enthält: ein Schutzventil-System (7) und ein Druckentlastungssystem (8).

14. Verfahren nach einem der Ansprüche 10 bis 13, **dadurch gekennzeichnet, dass** der Durchlass (3) eine Leitung aufweist, die dazu vorgesehen ist, an eine Öffnung eines Behälters (1) angeschlossen zu werden, und mit Ablöseverhinderungsmitteln und Anschlussmitteln (10), die dazu vorgesehen sind, mit konjugierten Anschlussmitteln eines Behälters (1) verbunden zu werden, versehen ist.
